# EUROPEAN PATENT APPLICATION

(11) **EP 0 549 252 A1**
(43) Date of publication of application: **30.06.1993**
(21) Application number: 92311495.3
(22) Date of filing: 16.12.1992
(51) Int. Cl.: C08F 10/00, C08F 2/34, B01J 8/00

(54) **Process for the gas-phase polymerisation of alpha-olefins in a fluidized-bed reactor**

(30) Priority: 23.12.1991 EP 91430032; 23.12.1991 EP 91430031
(71) Applicant: BP Chemicals Limited, London EC2M 7BA (GB); BP CHEMICALS S.N.C., F-92400 Courbevoie (FR)
(72) Inventor: Bontemps, Xavier, BP Chemicals Limited, London SW1W 0SU (GB); Chinh, Jean-Claude, BP Chemicals S.N.C., F-13117 Lavera (FR); Durand, Daniel-Claude, BP Chemicals S.N.C., F-13117 Lavera (FR)
(74) Representative: Hymers, Ronald Robson

(57) **Abstract**

A process for the polymerization of an alpha-olefin in a gas phase fluidized bed reactor having a fluidization grid therein comprises introducing a component comprising one or more components selected from the group comprising a solid catalyst component, a cocatalyst, an activator, an activaty retarder, and at least one alpha-olefin having from 6 to 12 carbon atoms, into the reactor with a carrier gas through a feed conduit which has an opening at or just above the upper surface of the fluidization grid and is positioned towards the centre of the cross-section of the reactor.

## Description

The present invention relates to a process for the gas-phase polymerization of alpha-olefins in a fluidized-bed reactor.

It is known to polymerize alpha-olefins, especially ethylene and propylene, in the gas phase in a fluidized-bed reactor.

A fluidized-bed polymerization reactor system generally comprises an upright elongate reactor in which the particles of the polymer being formed are kept in the fluidized state by an upwardly flowing fluidization gas stream containing the alpha-olefin(s) to be polymerized. In the lower part of the reactor, there is usually a perforated or porous plate, commonly known as a fluidization grid, which enables the fluidization gas stream, which enters the reactor below the fluidization grid, to be distributed into the fluidized bed to keep the polymer particles in the fluidized state above the grid. The reactor system also usually comprises a recycle line connecting the top of the reactor to the bottom of the reactor below the fluidization grid. This recycle line generally comprises a compressor for circulating the gas mixture leaving the top of the reactor and at least one heat exchanger for cooling the gas mixture to remove heat of reaction before the gas mixture is returned to the bottom of the reactor. The reactor is provided with means for introducing the alpha-olefin(s), catalyst and other components of the reaction system, as well as means for removing the polymer product.

Catalysts suitable for polymerizing alpha-olefins in gas-phase fluidized-bed reactors are also known. These include the Ziegler-Natta catalyst systems comprising :
(a) a solid catalyst containing a compound of a transition metal of groups IV, V or VI of the Periodic Table of the Elements, especially titanium or vanadium, and preferably a magnesium compound and,
(b) a cocatalyst comprising an organometallic compound of a metal of groups I, II or III of the Periodic Table of the Elements.

Other suitable catalysts are those based on chromium oxide supported on silica and thermally activated in a non-reducing atmosphere.

The solid catalyst or a solid component of the catalyst can be introduced into the reactor vessel continuously or intermittently through a line opening into the vessel wall. This may not be entirely satisfactory because, for high activity catalyst systems, the solid component, may not be distributed through the fluidized bed sufficiently well or sufficiently quickly and this may lead to the formation of hot spots and the production of agglomerates.

In addition to the catalyst, there may be other materials which need to be thoroughly and quickly dispersed through the fluidized bed.

For example, Published European Patent Application n° 0 359 444 describes a process for the continuous gas phase polymerization of one or more alpha-olefins in which the catalyst and alpha-olefin(s) are contacted in the gas-phase reactor in the presence of a very small amount of an activity retarder which is continuously introduced into the reactor vessel at a flow rate which is varied with time so as to keep substantially constant either the polymerization rate or the content of transition metal in the polymer product.

The activity retarder can be introduced direct into the reactor, preferably into a zone of the reactor where the activity retarder is dispersed rapidly, for example underneath the fluidization grid. It can also be introduced into the line for recycling the gaseous reaction mixture or into the line for supplying the reactor with fresh alpha-olefin(s).

Introducing the activity retarder either directly into the base of the reactor vessel or into a gas stream which enters the base of the reactor vessel is intended to ensure that the activity retarder is dispersed rapidly through the fluidized bed.

Such means for introducing the activity retarder can be very effective for gaseous retarders such as, for example, oxygen. However, it can be less effective for liquid activity retarders such as, for example, dimethylformamide (DMF). In view of the facts that the activity retarder is used in very small amounts and should be quickly and homogeneously dispersed through the fluidized bed, it is preferable that a liquid retarder be vaporized before entering the fluidized bed. However, the fluidizing gas entering the base of the reactor vessel is required to be cool so that it can remove heat of reaction from the fluidized bed. Thus, a liquid activity retarder which is introduced into the reactor vessel below the fluidization grid may not be sufficiently vaporized when entering the fluidized bed, even if it is preheated or even vaporized before being introduced into the reactor vessel. This may lead to locally high concentrations of activity retarder which can adversely affect the performance of the reactor and/or the quality of the polymer product.

Also, European Published Patent Application EP-A-0 376 559 discloses a process for the continuous gas phase polymerization of one or more alpha-olefins in a fluidized bed in which the catalyst and alpha-olefin(s) are contacted in the gas phase reactor in the presence of small but variable amounts of both an activity retarder and an activator which are continuously and simultaneously introduced into the reactor in a molar ratio and amounts which are varied with time so as to keep substantially constant either the polymerization rate or the content of transition metal in the polymer product. Both the activity retarder and the activator should be well and quickly dispersed through a fluidized bed.

European Patent Application EP-A-164 215 discloses a process for copolymerizing in the gas phase (a) ethylene with (b) butene-1 and/or propylene and with (c) octene-1. The process is carried out in a fluidized-bed polymerization reactor in the presence of a Ziegler-Natta catalyst. According to the European patent application, the ratio between the partial pressure of the ethylene in the gas phase in the reactor must be from 0.05 to 0.2.

It may be desirable to introduce fresh octene-1 or other relatively high molecular weight alpha-olefins into the reactor in the form of liquids.

The fresh octene or other relatively high molecular weight alpha-olefins could be introduced into the reactor by feeding them into the recycle loop so that they enter the reactor together with the bulk of the components of the reaction gas.

The process according to the present invention overcomes or at least mitigates the problems associated with the addition to a gas phase fluidized bed reactor of solid catalyst components, of alpha-olefin(s) and of certain other components which need to be rapidly and homogeneously dispersed through the fluidized bed.

Thus, according to the present invention a process for polymerizing an alpha-olefin in a gas phase fluidized bed reactor having a fluidization grid therein is characterized in that a component comprising one or more components selected from the group comprising a solid catalyst component, a cocatalyst, an activator, an activity retarder, and at least one alpha-olefin having from 6 to 12 carbon atoms, is continuously or intermittently introduced into the reactor with a carrier gas through a feed conduit which has an opening which is at or just above the upper surface of the fluidization grid and is positioned towards the centre of the cross-section of the reactor.

The solid catalyst component can be any solid catalyst component suitable for use in a gas phase fluidized bed reactor and includes catalyst or catalyst systems, such as those mentioned above, solid particles of a prepolymer obtained by bringing one or more alpha-olefins into contact with a catalyst or catalyst system and solid particles of an alpha-olefin polymer or copolymer still possessing catalytic polymerization activity, for example polymer being transferred from one polymerization reactor to another (as between stages in a multistage polymerization process).

Thus, the solid catalyst component can be, for example, a high activity catalyst of the Ziegler-Natta type in the form of solid particles comprising magnesium, halogen and at least one transition metal of the groups IV, V or VI of the Periodic Table of the elements, in particular titanium, vanadium or zirconium. If appropriate, the catalyst may be supported on a suitable support such as, for example, silica, alumina, or a magnesium compound, e.g. magnesium chloride or magnesium alkoxide.

Another example of a high activity catalyst which is suitable for use in the present invention is a catalyst containing a thermally activated chromium oxide supported on a refractory oxide, such as silica, alumina or aluminium silicate.

The catalyst can be used direct or in the form of a prepolymer. The conversion to a prepolymer is generally effected by contacting the catalyst with one or more alpha-olefins in an amount such that the prepolymer contains between 0.002 and 10 millimol of transition metal per gram. Usually, the components are contacted in the presence of a cocatalyst comprising an organo-metallic compound of a metal belonging to groups I, II or III of the Periodic Table of the Elements in an amount such that the molar ratio of the amount of metal in the organometallic compound to the amount of transition metal is between 0.1 and 50, preferably 0.5 and 20. The cocatalyst used in the preparation of the prepolymer can be the same as or different from the cocatalyst used in the gas phase fluidized bed polymerization reactor.

The prepolymer can be prepared continuously and injected directly into the reactor.

According to one embodiment of the present invention, a catalyst is continuously prepolymerized in a prepolymerization reactor, preferably to a relatively low ratio of prepolymer to transition metal, and is continuously fed through the feed conduit into the reactor.

The solid catalyst component could be solid particles still possessing catalytic polymerization activity. However, the process according to the present invention is primarly intended for introducing relatively small amounts of a component into a gas phase fluidized bed.

The solid catalyst component could be introduced into the reactor as a dry powder or as a slurry or dispersion in a suitable solvent.

The cocatalyst introduced into the gas phase fluidized bed polymerization reactor can be an organometallic compound comprising a metal of groups I, II or III of the Periodic Table of Elements, particularly aluminium, zinc or magnesium. The cocatalyst can be introduced into the polymerization reactor together with the catalyst and/or separately from the catalyst. The cocatalyst introduced separately from the catalyst can be introduced via a feed conduit according to the present invention.

However, it may be preferable that a cocatalyst and an activity retarder which react together are not both added via the same feed conduit.

As mentioned above, European Published Patent Application EP-A-0 359 444 discloses a process for the gas phase polymerization of an alpha-olefin in which a very small amount of an activity retarder is continuously introduced into the reactor at a flow rate which is varied with time, so as to keep substantially constant either the polymerization rate or the content of transition metal in the polymer produced. The disclosure of EP-A-0 359 444 is included herein by reference.

Also as mentioned above, European Published Patent Application EP-A-0 376 559 discloses a process for the continuous gas-phase polymerization of alpha-olefin(s) in which very small amounts of both an activator and an activity retarder are introduced continuously and simultaneously into a fluidized bed reactor in a molar ratio and at rates which vary with time so as to keep substantially constant either the polymerization rate or the content of transition metal in the polymer product. The disclosure of EP-A-0 376 559 is incorporated herein by reference.

The activity retarder which can be introduced into the gas phase fluidized bed reactor according to the process of the present invention can be selected from a wide variety of products which are preferably gases or volatile liquids under the polymerization conditions and are capable of reducing the polymerization rate of an alpha-olefin in the presence of a catalyst. Suitable activity retarders include those disclosed in EP-A-0 359 444 and EP-A-0 376 559 such as carbon monoxide, carbon dioxide, carbon disulphide, carbon oxysulphide, nitrogen oxides and peroxides, oxygen, alcohols, aldehydes, ketones, thiols, water and electron donor compounds capable of complexing the catalyst and reducing the polymerization rate.

The activity retarder can be introduced into the reactor as a solution in a suitable solvent. If the activity retarder is a liquid or is disolved in a liquid, the liquid is preferably heated before being injected into the reactor. Most preferably, the liquid is heated until it vaporises before being introduced into the reactor.

The activator used in accordance with the process described in EP-A-0 376 559 can be selected from a wide variety of products which are preferably gases or volatile liquids under the polymerization conditions and are capable of increasing the polymerization rate of an alpha-olefin in the presence of the catalyst. Suitable activators include those disclosed in EP-A-0 376 559 such as organometallic compounds of metals belonging to groups I, II or III of the Periodic Table of the Elements, in particular from organoaluminium, organozinc or organomagnesium compounds. The use of organoaluminium compounds is preferred, in particular triethylaluminium, diethylaluminium chloride, tri-n-propylaluminium, tri-n-butylaluminium and trisobutylaluminium. The activator can be the same as the cocatalyst.

The activator, like the activity retarder can be introduced directly into the reactor, or as a solution in a suitable solvent, or as a dispersion in a liquid and any liquid is preferably heated and most preferably vaporized before being introduced into the reactor.

Preferably the fresh alpha-olefin introduced through the feed conduit has from 8 to 10 carbon atoms. Most preferably the fresh alpha-olefin is octene-1.

The feed conduit has an opening at or just above the upper surface of the fluidization grid. This is a turbulent region of the fluidized bed where bubbles are forming and there is a great deal of agitation.

The opening of the feed conduit is positioned towards the centre of the cross-section of the reactor, i.e. away from the walls of the reactor. The agitation of the bed is lower adjacent to the walls of the reactor. Preferably, the feed conduit is at the centre of the cross-section of the reactor.

To avoid substantial disruption of the flow within the fluidized bed, the feed conduit preferably enters the reactor at a point below the fluidization grid, passes through the grid and opens at or just above the upper surface thereof.

More than one feed conduit may be used. Different feed conduits may be used to introduce different components. For example, although EP-A-0 376 559 requires an activator and an activity retarder to be introduced continuously and simultaneously, it may be preferable to use separate feed conduits if the two components tend to react with one another. If there is no problem of reaction between the components, two or more components can be introduced by the same feed conduit.

A carrier gas is used to carry the solid catalyst component, cocatalyst, activitor, activity retarder, or alpha-olefin having from 6 to 12 carbon atoms into the reactor. This gas could be fresh monomer or another gas being fed to the reactor or recycle gas. The velocity of the gas in the feed conduit conveying the solid catalyst component, cocatalyst, activator, activity retarder or alpha-olefin is generally at least 1 m/s, preferably at least 3 m/s, more preferably at least 20 m/s and most preferably at least 30 m/s. The upper limit of the gas velocity which can be used may depend on such factors as the density of the material being conveyed, the conditions within the fluidized bed and the length of jet which it is desired to form as the gas enters the bed. A practical upper limit may be, for example, 100 m/s. Generally, the velocity of the gas in the feed conduit will not exceed 90 m/s.

The process according to the present invention is suitable for the polymerization of one or more alpha-olefins containing from 2 to 12 carbon atoms in particular for the polymerization of ethylene or propylene. The process is particularly suitable for the homopolymerization of ethylene or the copolymerization of ethylene with at least one alpha-olefin containing from 3 to 12 carbon atoms. The process is also particularly suitable for the copolymerization of ethylene with one alpha-olefin having from 6 to 12 carbon atoms, such as octene-1, and optionally with one or more others alpha-olefin(s) containing from 3 to 12 carbon atoms.

When the process according to the present invention is used to introduce an activity retarder (such as dimethylformamide) in a process described in EP-A-0 359 444 or EP-A-0 376 559 it has been found that the activity retarder has an almost immediate effect. If however, the activity retarder is introduced under the fluidization grid, it may take some hours before its effect is apparent.

The present invention includes the use of an apparatus in the process according to the present invention. The apparatus comprises a gas phase fluidized bed polymerization reactor having a fluidization grid in the lower portion thereof and a feed conduit which enters the reactor at a point below the fluidization grid, passes through the fluidization grid and has an opening at or just above the upper surface of the grid, and towards the centre of the cross section of the reactor, the conduit being provided with inlet means for introducing into the conduit separately or together (a) a solid catalyst component, a cocatalyst, an activator, an activity retarder, or at least one alpha-olefin having from 6 to 12 carbon atoms and (b) a carrier gas.

The conduit preferably passes substantially vertically through the bottom of the reactor to the fluidization grid.

US Patent 4 495 337 describes apparatus for effecting the bottom drainage of a fluid bed polymerization reactor. This apparatus can be adapted for use in the process of the present invention. The disclosure of US 4 495 337 is incorporated by reference.

An embodiment of apparatus suitable for use in the present invention, which is an adaptation of the apparatus disclosed in US 4 495 337, will be described with reference to the accompanying drawings Figs 1 to 3

Figure 1 is a schematic representation of a gas phase fluidized bed polymerization reactor system.

Figure 2 is a schematic representation of an embodiment of the bottom of the reactor of Figure 1 on a larger scale.

Figure 3 is a schematic representation of a second embodiment of the bottom of the reactor of Figure 1 on a larger scale with a prepolymerization reactor connected to the feed conduit.

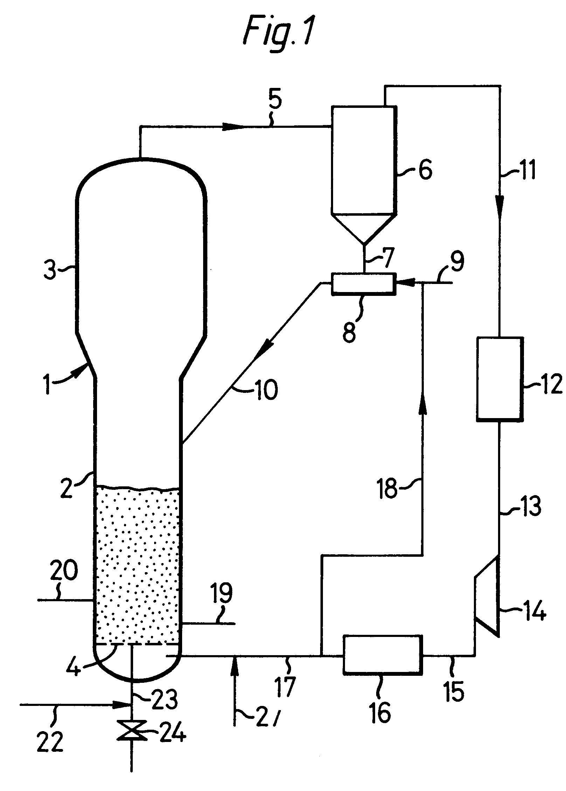

The fluidized bed polymerization reactor system illustrated in Figure 1 comprises a fluidized bed reactor (1) comprising a vertical cylinder (2) surmounted by a disengagement chamber (3) and having in its lower portion a fluidization grid (4). The disengagement chamber (3) is connected via a conduit (5) to a dust separator of the cyclone type (6), in which the particles entrained by the gas mixture leaving the reactor (1) are separated from the gas. A conduit (7) connects the lower end of the cyclone (6) to the mixing chamber of an ejector compressor (8) fed with carrier gas by the conduit (9). The conduit (10) for reintroducing the solid particles connects the ejector compressor (8) to the reactor (1). A conduit (11) connects the gas outlet of the cyclone (6) to a first heat exchanger (12) which is in turn connected via conduit (13) to a compressor (14) and thence to a second heat exchanger (16) via conduit (15). The recycle gas is then introduced into the reactor (1) below the fluidization grid by conduit (17). A conduit (18) connects conduit (17) to conduit (9) enabling recycle gas to be used as the carrier gas for the ejector compressor (8). The conduit (19) allows the reactor (1) to be fed with catalyst. The polymer product is removed via conduit (20). Fresh monomer and other constituants required to maintain the composition and pressure of the reaction gas can be introduced via conduit (21). Conduit (22) is used to introduce the solid catalyst component, cocatalyst, activator, activity retarder or at least one alpha-olefin having from 6 to 12 carbon atoms into the feed conduit (23). The feed conduit (23) is provided with a valve (24).

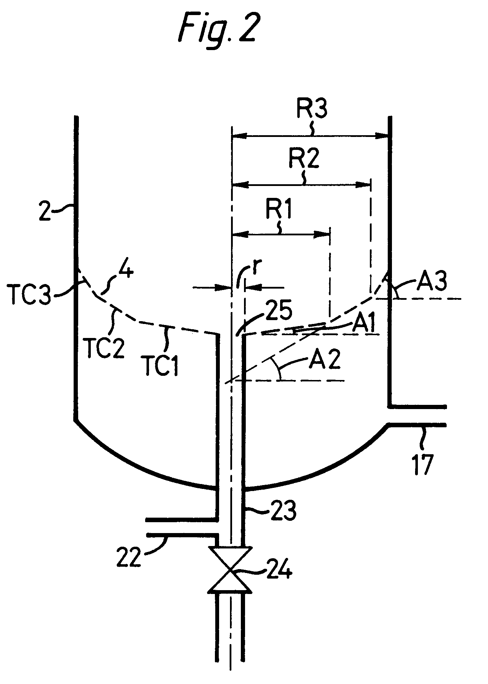

Figure 2 is an illustration of of an embodiment of the bottom of a fluidized bed reactor suitable for use in the process according to the present invention. The same parts have the same numerals as used in Figure 1.

The fluidization grid (4) comprises three truncated conical sections (TC1, TC2 and TC3) having a generatrix forming with the horizontal an angle of A1, A2 and A3 respectively. R3 is the internal radius of the reactor and the radius of the base of truncated cone TC3. R2 is the common base of the two truncated cones TC3 and TC2, and R1 is the common base of the two truncated cones TC1 and TC2. Other shapes of fluidization grid could be used e.g. flat or dished.

The feed conduit (23) enters the reactor through the bottom of the reactor and passes vertically up to the fluidization grid (4) and has an opening (25) at the upper surface of the fluidization grid and at the centre of the cross-section of the reactor. The feed conduit has a radius r. Inserts could be positioned in the feed conduit to change the effective radius of the conduit which would result is a change in the gas velocity for the same volumeric flow rate of gas. Typically, the internal diameter of the feed conduit is from about 0.05 to 0.1 m.

The solid catalyst component, cocatalyst or activity retarder is fed together with carrier gas via conduit (22). Carrier gas could also be supplied through the feed conduit (23) below the valve (24)

The apparatus illustrated in Figure 2 could also be used to withdraw polymer from the bottom of the reactor e.g. substantially as described in US 4 495 337.

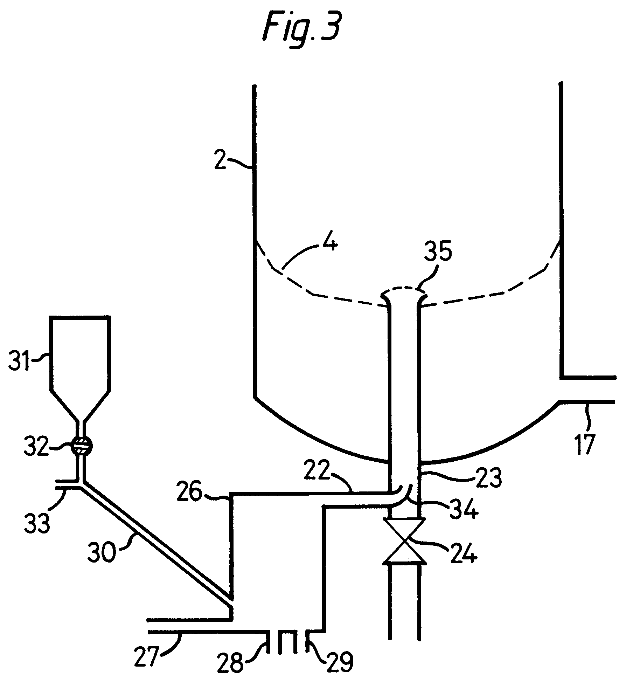

Figure 3 is an illustration of a second embodiment of the bottom of a fluidized bed reactor suitable for use in the process according to the present invention. The same parts have the same numerals as used in Figures 1 and 2. This embodiment comprises a prepolymerization reactor (26) connected to the feed conduit (23).

The prepolymerization reactor (26) comprises an upright cylinder into which is fed ethylene via line (27), a cocatalyst via line (28), hydrogen via line (29) and catalyst via line (30). The catalyst is stored, generally under an inert atmosphere such as nitrogen, in a storage vessel (31) and is fed to the conduit (30) by a ball valve (32). An inert gas, such as nitrogen, can be introduced via line (33) to carry the solid catalyst particles into the prepolymerization reactor (26).

The quantities of the catalyst, cocatalyst, hydrogen, and ethylene fed to the prepolymerization reactor and the dimensions of the upright cylinder of the reactor itself are preferably selected to provide an upward gas velocity in the upright cylinder of about 1 m/s and a residence time sufficient to allow prepolymerization of the catalyst to a relatively low ratio of polymer to transition metal in the catalyst, such as for example from 1 to 5 g of polymer per millimole of transition metal in the catalyst.

In the embodiment of Figure 3, the carrier gas is introduced through line (23), below the valve (24). The conduit (22) is provided with a nozzle (34), to assist in dispersing the prepolymer in the carrier gas and the feed conduit (23) ends just above the fluidization grid (4) and is provided with a distributor (35) to assist in dispersing the mixture into the fluidized bed. The diameter of the feed conduit (23), the diameters of the holes in the distributor (35) and the total gas flow rate would generally be selected to provide an injection speed of from 1 to 90 m/s, preferably from 20 to 90 m/s and most preferably from about 30 to 90 m/s. Such speeds will provide a good penetration into the fluidized bed as well as a better dispersion of the prepolymer.

The above description is intended to illustrate the invention and is not to be considered as limiting it to the specific apparatus shown in the drawings.

The invention is illustrated by the following examples.

### Example 1

A copolymer of ethylene and butene-1 was produced in a gas phase fluidized bed reactor system substantially as shown schematically in Figures 1 and 2.

The reactor comprised a vertical cylinder, 10 m high and having a radius R3 = 1.5 m, which cylinder was surmounted by a disengagement chamber.

In the lower part of the cylindrical reactor there was a fluidization grid and central feed conduit as shown in Fig 2.

The fluidization grid comprised three coaxial truncated conical portions (TC1 TC2 and TC3). The angles made by the conical surfaces with the horizontal A1, A2 and A3 were 6°, 12° and 20° respectively; the common base of the two cones TC1 and TC2 had a radius R1 = 0.7 m and the common base of the two cones TC2 and TC3 had a radius R2 = 1.2 m.

The feed/conduit had a radius r = 0.05 m and an opening at the centre of the fluidization grid. The feed conduit pipe extended vertically downwards from the fluidization grid through the bottom of the reactor and was provided with a full flow rapid opening valve of the spherical casing type, actuated by a pneumatic control providing its complete opening in 0.5 second. An inlet was provided between the valve and the bottom of the reactor for a solution of dimethylformamide (DMF). The carrier gas was introduced through the feed conduit.

Above the fluidization grid, the reactor contained a fluidized bed maintained at a height of about 8 m. The bed comprised about 15 tonnes of ethylene/butene-1 linear low density polyethylene copolymer. The temperature of the bed was maintained at about 75°C.

The fluidization gas comprised ethylene, butene-1, hydrogen and nitrogen under a total pressure of about 2.0 MPa and had an ascending velocity of about 0.5 m/s.

A catalyst identical to that described in Example 1 of French patent N° 2 405 961 was introduced intermittently into the reactor by a line opening into the side wall of the reactor. The catalyst comprised titanium, chlorine and magnesium and had been previously converted into a prepolymer containing 40 g of polyethylene per millimole of titanium and an amount of tri-n-octylaluminium such that the molar ratio of Al/Ti was about 0.8 to 0.85.

Tri-n-octyl aluminium was also introduced into the reactor to give an Al/Ti molar ratio in the reactor of 1.6.

A solution of dimethylformamide (DMF) in isopentane, containing 0.004 mol of DMF per litre was continuously introduced into the reactor via the inlet and feed conduit. The DMF solution was preheated to about 80°C by a heat exchanger downstream of a pump feeding the DMF solution into the inlet. The carrier gas, was process gas at a temperature of 55°C and passed through the feed conduit at a rate of 40-50 Nm³/h giving a speed of 1.5 m/s. The carrier gas was at a temperature higher than that of the recycle gas used to fluidize the polymer particles in the bed.

During the copolymerization it was noted that the introduction of the DMF had an almost immediate effect on the reactivity of the hydrogen and the activity.

### Example 2

A copolymer of ethylene and butene-1 is produced in a gas phase fluidized bed reactor system substantially as described in Example 1 and the process is also substantially the same except that the temperature of the bed is maintained at a temperature of about 74°C, and the feed conduit is used to introduce a prepolymerized catalyst in addition to the DMF.

The catalyst which is the same as that used in Example 1 is introduced as dry solid particles into the base of a prepolymerization reactor comprising a 0.5 m diameter, 3 m long tube. The catalyst is introduced via a ball valve under pressure of nitrogen at a rate of about 750 g/h. Ethylene is introduced to the prepolymerization reactor at a rate of 870 kg/hour. Tri-n-octyl aluminium is continuously introduced to the prepolymerization reactor to give an Al/Ti molar ratio of about 0.8. Hydrogen is also introduced to the prepolymerization reactor at a rate of 0.1 N m³/h.

The catalyst is prepolymerized in the prepolymerization reactor to a level of 5 g of polymer per millimole of titanium in the catalyst.

This lightly prepolymerized catalyst is conveyed by the reaction gases from the prepolymerization reactor into the feed conduit where it is carried into the polymerization reactor by the carrier gas which is process gas at a temperature of 55°C and which passes through the feed conduit at a speed of about 20 m/s. The process gas is at a higher temperature than the cooled recycle gas fed to the bottom of the reactor to fluidize the polymer particles.

### Example 3

A copolymer of ethylene and octene-1 is produced in a gas phase fluidized bed reactor system substantially as described in Example 1 except that the feed conduit is used to introduce octene-1.

Above the fluidization grid, the reactor contains a fluidized bed maintained at a height of about 8 m. The bed comprises about 15 tonnes of ethylene/octene-1 linear low density polyethylene copolymer. The temperature of the bed is maintained at about 80°C.

The fluidization gas comprises ethylene, octene-1, hydrogen and nitrogen under a total pressure of about 2.0 MPa and has an ascending velocity of about 0.5 m/s.

A catalyst identical to that described in Example 1 of French patent N° 2 405 961 is introduced intermittently into the reactor by a line opening into the side wall of the reactor. The catalyst comprises titanium, chlorine and magnesium and has been previously converted into a prepolymer containing 40 g of polyethylene per millimole of titanium and an amount of tri-n-octylaluminium such that the molar ratio of Al/Ti is about 0.8 to 0.85.

The octene-1 is preheated to about 80°C by a heat exchanger downstream of a pump feeding the octene into the inlet. The carrier gas is process gas at a temperature of 55°C and passes through the feed/discharge pipe at a rate of 40-50 Nm³/h giving a speed of 1.5 m/s. The carrier gas is at a temperature higher than that of the recycle gas used to fluidize the polymer particles in the bed.

## Claims

1. A process for polymerizing an alpha-olefin in a gas phase fluidized bed reactor having a fluidization grid therein characterized in that a component comprising one or more components selected from the group comprising a solid catalyst component, a cocatalyst, an activator, an activity retarder, and at least one alpha-olefin having from 6 to 12 carbon atoms, is continuously or intermittently introduced into the reactor with a carrier gas through a feed conduit which has an opening which is at or just above the upper surface of the fluidization grid and is positioned towards the centre of the cross-section of the reactor.

2. A process as claimed in claim 1 in which the activator or activity retarder is a liquid or is dissolved or dispersed in a liquid.

3. A process as claimed in claim 2 in which the activity retarder is dimethylformamide.

4. A process as claimed in claim 3 in which the dimethylformamide is heated before being introduced into the feed conduit.

5. A process as claimed in any one of claims 1 to 4 in which the alpha-olefin has from 8 to 10 carbon atoms.

6. A process as claimed in claim 5 in which the alpha-olefin is octene-1.

7. A process as claimed in claim 6 in which ethylene is copolymerized with octene-1.

8. A process as claimed in any one of claims 1 to 7 in which the carrier gas passes through the feed conduit at a velocity of at least 3 m/s.

9. A process as claimed in any one of claims 1 to 8 in which the feed conduit passes substantially vertically through the bottom of the reactor to the fluidization grid.

10. A process as claimed in any one of claims 1 to 9 in which the feed conduit is at the centre of the cross-section of the reactor.

11. Use, in a process as claimed in any one of claims 1 to 10, of an apparatus which comprises a gas phase fluidized bed polymerization reactor (1) having a fluidization grid (4) in the lower portion thereof and a feed conduit (23) which enters the reactor (1) at a point below the fluidization grid (4), passes through the fluidization grid (4) and has an opening at or just above the upper surface of the fluidization grid (4) and positioned towards the centre of the cross section of the reactor (1), the feed conduit (23) being provided with means (22) for introducing into the feed conduit (23) separately or together (a) a solid catalyst component, a cocatalyst, an activator, an activity retarder or at least one alpha-olefin and (b) a carrier gas.
